# EUROPÄISCHE PATENTANMELDUNG

(11) **EP 2 456 029 A2**
(43) Veröffentlichungstag der Anmeldung: **23.05.2012**
(21) Anmeldenummer: 11189667.6
(22) Anmeldetag: 18.11.2011
(51) Int. Cl.: H02B 1/04

(54) **Funktionsmodul zur Montage auf einer Montageplattform eines Schaltschrankes**

(30) Priorität: 18.11.2010 DE 102010044137
(71) Anmelder: LQ Mechatronik-Systeme GmbH, 74354 Besigheim (DE)
(72) Erfinder: Quero, José, 74321 Bietigheim-Bissingen (DE); Lentmaier, Steffen, 71723 Großbottwar (DE); Mack, Bernd, 74343 Sachsenheim (DE)
(74) Vertreter: Patentanwälte Ruff, Wilhelm, Beier, Dauster & Partner

(57) **Zusammenfassung**

Ein Funktionsmodul (10) zur Montage auf einer Montageplattform eines Schaltschrankes umfasst: Befestigungsmittel (11), die mit Befestigungsmitteln der Montageplattform korrespondieren und die eine, insbesondere werkzeuglose, Montage des Funktionsmoduls auf der Montageplattform ermöglichen, einen von den Befestigungsmitteln beabstandeten Bauelementeträger (12), auf dem elektromechanische und/oder elektronische Bauelemente (20, 21) befestigbar sind, Anschlüsse (13a, 13b, 13c) zum Anschließen einer Prozessperipherie und/oder der elektromechanischen und/oder elektronischen Bauelemente, und eine mikroprozessorbasierte Steuereinheit (14), die in einem Bereich zwischen den Befestigungsmitteln (11) und dem Bauelementeträger (12) angeordnet und dazu ausgebildet ist, Signale der Prozessperipherie zu verarbeiten.

## Beschreibung

Die Erfindung betrifft ein Funktionsmodul zur Montage auf einer Montageplattform eines Schaltschrankes.

Die WO 03/094314 A21 zeigt Module zur Montage auf einer Montageplattform eines Schaltschrankes. Ein jeweiliges Modul umfasst einen Bauelementeträger, auf dem elektromechanische und/oder elektronische Bauelemente befestigbar sind. Weiter sind an entgegengesetzten Enden des Bauelementeträgers Anschlüsse zum Anschließen einer Prozessperipherie und der elektromechanischen und/oder elektronischen Bauelemente vorgesehen, wobei zwischen den Anschlüssen an den entgegengesetzten Enden auf einer Rückseite des Bauelementeträgers elektrische Leitungen verlaufen, die korrespondierende Kontakte der Anschlüsse der entgegengesetzten Enden elektrisch miteinander verbinden, um eine Verdrahtung der auf dem Bauelementeträger angeordneten Bauelemente zu vereinfachen.

Der Erfindung liegt die Aufgabe zugrunde, ein auf den oben genannten Modulen basierendes Funktionsmodul zu schaffen, welches einen erweiterten Funktionsumfang aufweist.

Die Erfindung löst diese Aufgabe durch ein Funktionsmodul nach Anspruch 1. Bevorzugte Ausführungsformen sind Gegenstand der Unteransprüche, die hiermit durch Bezugnahme zum Inhalt der Beschreibung gemacht werden.

Das erfindungsgemäße Funktionsmodul, d.h. ein Modul mit einem vorgegebenen Satz von mechanischen, elektrischen und elektronischen Funktionen, die einem Benutzer zur Verfügung stehen, ohne dass der Benutzer das Modul hierzu modifizieren bzw. erweitern muss, ist zur Montage auf einer Montageplattform eines Schaltschrankes, wie sie beispielsweise in der WO 03/094314 A2 mit dem Bezugszeichen 10 bezeichnet ist, geeignet. Das Funktionsmodul umfasst Befestigungsmittel, beispielsweise in Form von Laschen, die mit Befestigungsmitteln der Montageplattform korrespondieren und die eine, insbesondere werkzeuglose, Montage des Funktionsmoduls auf der Montageplattform ermöglichen. Das Funktionsmodul umfasst weiter einen von den Befestigungsmitteln beabstandeten Bauelementeträger bzw. eine Bauelementeträgerplatte, auf dem bzw. der elektromechanische und/oder elektronische Bauelemente, beispielsweise Relais, Schütze usw., befestigbar sind, und Anschlüsse zum Anschließen einer Prozessperipherie, d.h. Aktoren, Sensoren, Motoren, Maschinen, Anlagen, Datenübertragungsleitungen, Feldbussen usw., die mittels des Funktionsmoduls und gegebenenfalls weiterer Funktionsmodule gesteuert werden bzw. mit dem Funktionsmodul Daten austauschen, und der elektromechanischen und/oder elektronischen Bauelemente. Eine mikroprozessorbasierte bzw. mikrocontrollerbasierte Steuereinheit des Funktionsmoduls ist in einem Bereich zwischen den Befestigungsmitteln und dem Bauelementeträger angeordnet und dazu ausgebildet, Signale der Prozessperipherie im Hinblick auf eine Steuerung und/oder eine Diagnose der Prozessperipherie und des Funktionsmoduls selbst zu verarbeiten. Im Vergleich zu den in der WO 03/094314 A2 gezeigten Modulen weist das erfindungsgemäße Funktionsmodul einen erweiterten Funktionsumfang auf, sodass eine Nachbestückung in diesem Umfang nicht mehr notwendig ist.

In einer Weiterbildung umfasst das Funktionsmodul eine Feldbus-Schnittstelleneinheit, die in dem Bereich zwischen den Befestigungsmitteln und dem Bauelementeträger angeordnet und dazu ausgebildet ist, eine Feldbus-Schnittstelle zu bilden und Ein-/Ausgabeoperation über die Anschlüsse zum Anschließen der Prozessperipherie und der elektromechanischen und/oder elektronischen Bauelemente zu ermöglichen. Die Feldbusschnittstelle kann beispielsweise eine ARCNET-, CAN-, Device-Net, EtherCAT-, AS-i- und/oder SERCOS-Schnittstelle sein.

In einer Weiterbildung ist die Feldbus-Schnittstelleneinheit auf einer zugehörigen mit geeigneten ICs bestückten Platine gebildet, wobei für unterschiedliche Feldbus-Typen unterschiedliche Platinen vorgesehen sein können, von denen eine für den verwendeten Feldbus geeignete in dem Funktionsmodul angeordnet ist.

In einer Weiterbildung ist eine Energieführungseinheit in dem Funktionsmodul vorgesehen, die in dem Bereich zwischen den Befestigungsmitteln und dem Bauelementeträger angeordnet und dazu ausgebildet ist, Betriebs- und/oder Versorgungsspannungen geeignet zu verteilen.

In einer Weiterbildung ist die Energieführungseinheit auf einer zugehörigen Platine gebildet, die eine Verdrahtungsebene darstellt, d.h. auf der eine Vorverdrahtung realisiert ist, die sonst bei der Endverdrahtung des Funktionsmoduls mit der Prozessperipherie von Hand vorgenommen werden müsste.

In einer Weiterbildung ist die mikroprozessorbasierte Steuereinheit auf einer mit zugehörigen ICs, beispielsweise mit einem Mikroprozessor-IC, bestückten Platine gebildet.

In einer Weiterbildung bilden die Feldbus-Schnittstelleneinheit-Platine, die Energieführungseinheit-Platine und die Steuereinheit-Platine zueinander parallele Ebenen, die in einem Montage-Raum zwischen den Befestigungsmitteln und dem Bauelementeträger angeordnet sind.

In einer Weiterbildung ist eine Leistungselektronikeinheit vorgesehen, die in dem Bereich zwischen den Befestigungsmitteln und dem Bauelementeträger angeordnet und dazu ausgebildet ist, Schalt- und/oder Ansteuerungsfunktionen für Prozessperipherie in Form von Verbrauchern, die mit Netzspannung versorgt sind, beispielsweise Elektromotoren, bereitzustellen.

In einer Weiterbildung ist der Bereich zwischen den Befestigungsmitteln und dem Bauelementeträger von im wesentlichen geschlossenen Wandungen umgeben, die zusammen mit dem Bauelementeträger einen Hohlraum bzw. ein Gehäuse bilden, wobei die mikroprozessorbasierte Steuereinheit, und/oder die Feldbus-Schnittstelleneinheit, und/oder die Leistungselektronikeinheit und/oder die Energieführungseinheit in dem Hohlraum bzw. dem Gehäuse, insbesondere in beliebiger Reihenfolge, angeordnet sind.

Die Erfindung wird nachfolgend unter Bezugnahme auf die Zeichnungen beschrieben, die bevorzugte Ausführungsformen der Erfindung darstellen. Hierbei zeigt:
- Fig. 1: ein erfindungsgemäßes Funktionsmodul zur Montage auf einer Montageplattform eines Schaltschrankes mit darauf angeordneten Bauelementen in perspektivischer Darstellung und
- Fig. 2: ein Schnittbild des in Fig. 1 gezeigten Funktionsmoduls.

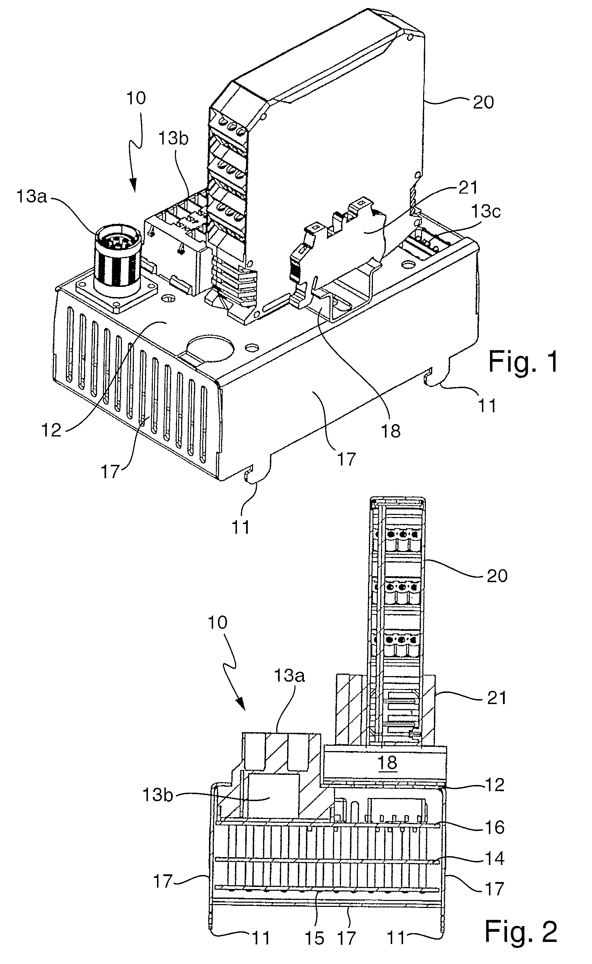

Fig. 1 zeigt ein erfindungsgemäßes Funktionsmodul 10 zur Montage auf einer Montageplattform eines Schaltschrankes, wie sie beispielsweise in der WO 03/094314 A2 mit dem Bezugszeichen 10 bezeichnet ist, mit darauf angeordneten Bauelementen, beispielsweise in Form eines elektronischen Lastrelais 20 für 3-Phasen-Netze und eines weiteren Bauelements 21, in perspektivischer Darstellung.

Das Funktionsmodul 10 umfasst Befestigungsmittel in Form von Laschen 11, die mit Befestigungsmitteln in Form von Ausnehmungen der Montageplattform korrespondieren und die eine werkzeuglose Montage des Funktionsmoduls 10 auf der Montageplattform ermöglichen. Weiter ist ein von den Befestigungsmitteln 11 beabstandeter Bauelementeträger in Form einer Gehäusewandung 12 vorgesehen, auf dem die Bauelemente 20 und 21 mittels einer Hutschiene 18, die mit dem Bauelementeträger bzw. der Gehäusewandung 12 verschraubt ist, befestigt sind. Weiter sind Anschlüsse 13a, 13b und 13c vorgesehen.

Der runde Anschluss 13a dient zum Anschließen einer Prozessperipherie in Form von beispielsweise Elektromotoren, Sensoren, Aktoren, Geräten usw. Der Stecker 13b dient als Verbindungsstecker zu weiteren, nicht gezeigten Funktionsmodulen bzw. zu einer nicht gezeigten, übergeordneten Steuereinheit. Mittels des Steckers 13b wird das Funktionsmodul 10 beispielsweise an Energie- und Datenleitungen angeschlossen, d.h. beispielsweise mit Wechsel- bzw. Drehstrom, 24V DC, Prozesserde, einem Nullleiter, Feldbusleitungen usw. verbunden. Benachbarte Funktionsmodule können mittels des Steckers 13b auf einfache Art und Weise zeilenweise miteinander verbunden werden, da in Querrichtung des Steckers 13b benachbart angeordnete Kontakte elektrisch miteinander kurzgeschlossen sind und derart einen Zu- bzw. einen Abgangskontakt bilden. Ein Anschluss der Bauelemente 20 und 21 an das Funktionsmodul 10 erfolgt mittels des Steckers 13c.

Eine mikroprozessorbasierte Steuereinheit in Form einer Steuereinheit-Platine 14 (siehe Fig. 2) ist in einem Bereich zwischen den Befestigungsmitteln 11 und dem Bauelementeträger 12 angeordnet bzw. befestigt und dazu ausgebildet, Signale der Prozessperipherie im Hinblick auf eine Steuerungs- und/oder Diagnosefunktion zu verarbeiten. Der Bereich zwischen den Befestigungsmitteln 11 und dem Bauelementeträger 12 ist von Wandungen 17 umgeben, die zusammen mit dem Bauelementeträger 12 einen Hohlraum bilden, in dem die Steuereinheit-Platine 14 angeordnet ist.

In dem Hohlraum zwischen den Befestigungsmitteln 11 und dem Bauelementeträger 12 ist weiter eine Feldbus-Schnittstelleneinheit in Form einer Feldbus-Schnittstelleneinheit-Platine 15 vorgesehen. Die Feldbus-Schnittstelleneinheit-Platine 15 implementiert eine Feldbus-Schnittstelle gemäß einem vorgegebenen Feldbus-Standard und ermöglicht unter anderem Ein-/Ausgabeoperation über den Anschluss 13b, über den der Feldbus angeschlossen ist, und den Anschluss 13c, über den die Bauelemente 20 und 21 in Abhängigkeit von den über den Feldbus übertragenen Schaltinformation angesteuert werden. Beispielsweise kann ein Schaltzustand des elektronischen Lastrelais 20 über die Feldbus-Schnittstelleneinheit-Platine 15 eingestellt werden, wobei die Schaltinformationen über den Stecker 13b übertragen und die Steuersignale über den Stecker 13c ausgegeben werden.

In dem Hohlraum zwischen den Befestigungsmitteln 11 und dem Bauelementeträger 12 ist weiter eine Energieführungseinheit in Form einer Energieführungseinheit-Platine 16 vorgesehen, die dazu ausgebildet ist, auf zugehörigen Leiterbahnen Betriebs- und/oder Versorgungsspannungen, beispielsweise 230V AC, Drehstrom, Prozesserde, ein gemeinsames Nullpotential, 24V DC usw., geeignet zwischen den Anschlüssen 13a bis 13c zu verteilen. Die Energieführungseinheit-Platine 16 bildet eine Verdrahtungsebene, die ein nachträgliches Verdrahten zumindest teilweise überflüssig macht.

Die Feldbus-Schnittstelleneinheit-Platine 15, die Energieführungseinheit-Platine 16, die Steuereinheit-Platine 14 und der Bauelementeträger 12 bilden zueinander parallele Ebenen, die in dem Hohlraum wie in Fig. 2 gezeigt befestigt sind. Es versteht sich, dass die Platinen auch in einer anderen Reihenfolge bzw. Anordnung vorgesehen sein können.

Zusätzlich zu den gezeigten funktionalen Einheiten bzw. Platinen 14, 15 und 16 können auch noch weitere funktionale Einheiten vorgesehen sein, beispielsweise eine Leistungselektronikeinheit bzw. Leistungselektronikplatine, die ebenfalls in dem Hohlraum angeordnet sein kann. Die Leistungselektronikeinheit kann dazu ausgebildet sein, Schalt- und/oder Ansteuerungsfunktionen für die Prozessperipherie in Form von Verbrauchern, die mit Netzspannung versorgt sind, bereitzustellen und beispielsweise Schütze, Leistungshalbleiter usw. umfassen.

Die gezeigten Ausführungsformen realisieren eine mechanische Montageplattform mit integrierter Elektronik. Verschiedene funktionale Schichten, Ebenen bzw. Blöcke verwirklichen hierbei unterschiedliche vorgegeben Funktionen. So ist ein funktionaler Block in Form einer Verdrahtungsebene vorgesehen, die der Energieverteilung dient. Weiter ist ein Logik-Block vorgesehen, der zur Steuerung und Diagnose dient. Eine I/O-Ebene dient zur Kommunikation für die gängigen Industriefeldbusse. Die funktionalen Blöcke können in den von Wandungen 17 umgebenen Hohlraum integriert sein oder teilweise auch auf dem Bauelementeträger angeordnet sein. Ein Benutzer kann ein voll ausgestattetes Funktionsmodul verwenden oder er kann einzelne, für ihn sinnvolle, Funktionen auswählen.

Die erfindungsgemäßen Funktionsmodule weisen folglich verglichen mit den herkömmlichen Funktionsmodulen einen erweiterten Funktionsumfang auf.

## Patentansprüche

1. Funktionsmodul (10) zur Montage auf einer Montageplattform eines Schaltschrankes, umfassend:
- Befestigungsmittel (11), die mit Befestigungsmitteln der Montageplattform korrespondieren und die eine, insbesondere werkzeuglose, Montage des Funktionsmoduls auf der Montageplattform ermöglichen,
- einen von den Befestigungsmitteln beabstandeten Bauelementeträger (12), auf dem elektromechanische und/oder elektronische Bauelemente (20, 21) befestigbar sind, und
- Anschlüsse (13a, 13b, 13c) zum Anschließen einer Prozessperipherie und/oder der elektromechanischen und/oder elektronischen Bauelemente,
**gekennzeichnet durch**
- eine mikroprozessorbasierte Steuereinheit (14), die in einem Bereich zwischen den Befestigungsmitteln (11) und dem Bauelementeträger (12) angeordnet und dazu ausgebildet ist, Signale der Prozessperipherie zu verarbeiten.

2. Funktionsmodul nach Anspruch 1, **gekennzeichnet durch** eine Feldbus-Schnittstelleneinheit (15), die in dem Bereich zwischen den Befestigungsmitteln und dem Bauelementeträger angeordnet und dazu ausgebildet ist, eine Feldbus-Schnittstelle zu bilden und Ein-/Ausgabeoperation über die Anschlüsse zum Anschließen der Prozessperipherie und der elektromechanischen und/oder elektronischen Bauelemente zu ermöglichen.

3. Funktionsmodul nach Anspruch 2, **dadurch gekennzeichnet, dass** die Feldbus-Schnittstelleneinheit auf einer zugehörigen Platine (15) gebildet ist, wobei insbesondere für unterschiedliche Feldbus-Typen unterschiedliche Platinen vorgesehen sind.

4. Funktionsmodul nach einem der vorhergehenden Ansprüche, **gekennzeichnet durch** eine Energieführungseinheit (16), die in dem Bereich zwischen den Befestigungsmitteln und dem Bauelementeträger angeordnet und dazu ausgebildet ist, Betriebs- und/oder Versorgungsspannungen geeignet zu verteilen.

5. Funktionsmodul nach Anspruch 4, **dadurch gekennzeichnet, dass** die Energieführungseinheit auf einer zugehörigen Platine (16) gebildet ist, die eine Verdrahtungsebene bildet.

6. Funktionsmodul nach einem der vorhergehenden Ansprüche, **dadurch gekennzeichnet, dass** die mikroprozessorbasierte Steuereinheit auf einer zugehörigen Platine (14) gebildet ist.

7. Funktionsmodul nach Anspruch 3, 5 und 6, **dadurch gekennzeichnet, dass** die Feldbus-Schnittstelleneinheit-Platine, die Energieführungseinheit-Platine und die Steuereinheit-Platine zueinander parallele Ebenen bilden.

8. Funktionsmodul nach einem der vorhergehenden Ansprüche, **gekennzeichnet durch** eine Leistungselektronikeinheit, die in dem Bereich zwischen den Befestigungsmitteln und dem Bauelementeträger angeordnet und dazu ausgebildet ist, Schalt- und/oder Ansteuerungsfunktionen für Prozessperipherie in Form von Verbrauchern, die mit Netzspannung versorgt sind, bereitzustellen.

9. Funktionsmodul nach einem der vorhergehenden Ansprüche, **dadurch gekennzeichnet, dass** der Bereich zwischen den Befestigungsmitteln und dem Bauelementeträger von im wesentlichen geschlossenen Wandungen (17) umgeben ist, die zusammen mit dem Bauelementeträger einen Hohlraum bilden, wobei die mikroprozessorbasierte Steuereinheit, die Feldbus-Schnittstelleneinheit, die Leistungselektronikeinheit und/oder die Energieführungseinheit in dem Hohlraum angeordnet sind.
